# EUROPEAN PATENT APPLICATION

(11) **EP 2 154 739 A1**
(43) Date of publication of application: **17.02.2010**
(21) Application number: 08161777.1
(22) Date of filing: 05.08.2008
(51) Int. Cl.: H01M 2/10

(54) **Battery seat having stability and conductivity**

(71) Applicant: Tseng Tsung-I, 302 Hsinchu County 30271 (TW)
(72) Inventor: Tseng Tsung-I, 302 Hsinchu County 30271 (TW)
(74) Representative: Lang, Christian

(57) **Abstract**

The present invention is a battery seat. A fastening unit of the seat is made of a metal with a good elasticity, a long life and a high ductility. Thus, it is not easily fatigued and a battery can be stably set on the seat. Furthermore, with ductility of metal, elasticity between the battery and electrode units is not easily fatigued and a good conductivity is obtained.
In particular, two fastening units are obtained from the same material as the base of the seat, i.e. plastic; and other two fastening units are made of metal.

## Description

### Field of the invention

The present invention relates to a battery seat; more particularly, relates to obtaining enhanced elasticity and strengthened structure of fastening units and electrode units for good stability and conductivity after laying a battery on the seat.

### Description of the Related Art

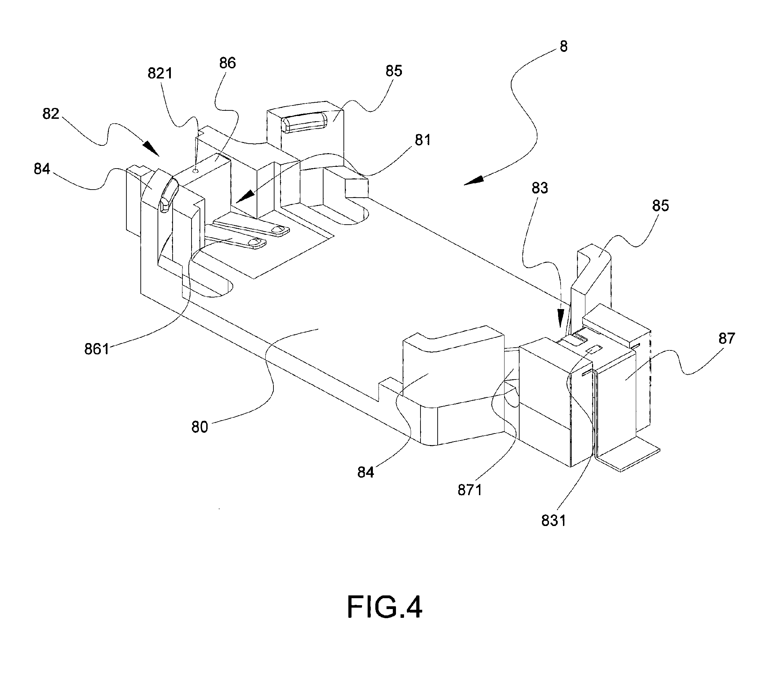

As shown in FIG.4, a general battery seat 8 comprises a base 81 with a laying area 80. Therein, the base 81 is set with butting seats 82,83 at two sides; fastening parts 84,85 are extended from two sides of the butting seats 82,83 as a whole; the butting seats 82,83 are fixed with a positive metal plate 86 and a negative metal plate 87; an elastic plate 861 is fixed on a surface of the butting seat 82 at an end of the positive metal plate 86; another elastic plate 871 is extended into the laying area 80 at an end of the negative metal plate 87; and, the butting seats 82,83 are fixed to the positive and negative metal plates 86,87 with riveting points 821,831 on surfaces of the butting seats 82,83.

On using the seat, a circuit board (not shown in the figure) is bonded together. A battery (not shown in the figure) is slantingly butted at a side on one of the fastening parts 84,85 to fasten the fastening part 84 at a side of a top surface of the battery. Then a downward force is applied at another side of the top surface of the battery to press the other fastening part 85 by another side of the battery. After the another side of the battery passes the other fastening part 85, the battery 7 is laid in the laying area 11. Therein, the fastening parts 84,85 are fastened on the top surface of the battery. An elastic plate 861 of the positive metal plate 86 is contacted at an upper side of the battery and an elastic plate 871 of the negative metal plate 87 is contacted at a lower side of the battery to turn on the battery for related use.

The butting seats 82,83 and the fastening part 84,85 of the battery seat 8 are made of a plastic material as a whole for the battery to be laid in. Hence, the fastening parts 84,85 may be deformed with weak elasticity after injection molding and may have hard texture easily broken; and the battery is thus not easily installed. In the other hand, the negative metal plates 86,87 are fixed on the butting seats 82,83 with pivot points (the riveting point3 821,831) and points of application so close that elasticity may be easily fatigued with weak elasticity. Moreover, the force on the point of application of the negative metal plate 87 is upward with a support at the pivot point where the battery is contacted with the negative metal plate; and, this may also make elasticity easily fatigued. Hence, the prior art does not fulfill all users' requests on actual use.

### Summary of the invention

The main purpose of the present invention is to obtain enhanced elasticity and strengthened structure of fastening units and electrode units for good stability and conductivity after laying a battery on a seat.

To achieve the above purpose, the present invention is a battery seat having stability and conductivity, comprising a base, two first fastening units, two second fastening units, a first electrode unit and a second electrode unit, where the base comprises a laying area, a fixing seat at a side and a plugging slot at another side; the plugging slot is connected with the laying area; the base is made of a plastic material; the first fastening units are set at two sides of the plugging slot separately and are formed with the base as a whole; the second fastening units are bonded to the base at two sides of the fixing seat separately and are made of a metal; the first electrode unit is deposited on the fixing seat; the first electrode unit has an end on a surface of the fixing seat corresponding to the laying area and another end extended out a side of the base; the second electrode unit is bonded to the plugging slot; and the second electrode unit has an end extended out the laying area and another end extended out a side of the base.

Accordingly, a novel battery seat having stability and conductivity is obtained.

### Brief description of the drawings

The present invention will be better understood from the following detailed description of the preferred embodiment according to the present invention, taken in conjunction with the accompanying drawings, in which
- FIG.1: is the perspective view showing the preferred embodiment according to the present invention;
- FIG.2: is the view showing the assembly of the present invention;
- FIG.3: is the sectional view showing the state of use; and
- FIG.4: is the perspective view of the prior art.

### Description of the preferred embodiment

The following description of the preferred embodiment is provided to understand the features and the structures of the present invention.

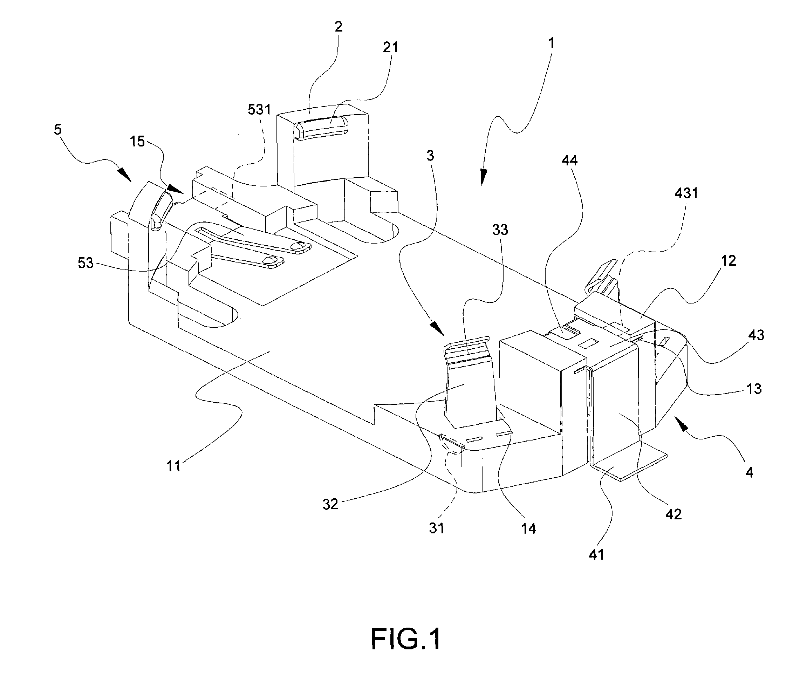

Please refer to FIG.1, which is a perspective view showing a preferred embodiment according to the present invention. As shown in the figure, the present invention is a battery seat having stability and conductivity, comprising a base 1, two first fastening units 2, two second fastening units 3, a first electrode unit 4 and a second electrode unit 5, where the fastening units 2,3 and the electrode units 4,5 have enhanced elasticity and strengthened structure for good stability and conductivity without electrostatic charge after bonding a battery on the seat.

The base 1 comprises a laying area 11; a fixing seat 12 at a side; and a plugging slot 15 at another side. The fixing seat 12 has rabbets 13 on top; and has two grooves 14 on two sides separately. The plugging slot 15 is connected with the laying area 11. The base 1 is made of a plastic material.

The two first fastening units 2 are adhered at two sides of the plugging slot 15 separately; and are extended perpendicularly on the base 1 as a whole. Each first fastening unit 2 has a hook 21 on an end surface corresponding to the laying area 11.

Each second fastening unit 3 comprises a hooking part 31, an elastic part 32 and a hook 33, where the hooking part 31 is bonded to the grooves 14 at two sides of the base 1; the elastic part 32 is connected with the hooking part 31 and is perpendicularly set on the base 1; the hook 33 is set on an end surface of the elastic part 32 corresponding to the laying area 11; and the second fastening unit 3 is made of a metal.

The first electrode unit 4 comprises a contacting part 41, an extension part 42, a planar part 43 and an elastic plate 44, where the extension part 42 is perpendicularly set at an end of the contacting part 41; the planar part 43 is set flat at an end of the extension part 42 and has two fins 431 at two sides separately; the elastic plate 44 is slantingly set at an end of the planar part 43. The fins 431 are bonded to the rabbets 13 on the end surfaces of the fixing seat 12. The contacting part 41 is extended out a side of the base 1. The elastic plate 44 is corresponding to the laying area 11.

The second electrode unit 5 comprises a contacting part 51, an extension part 52 and an elastic plate 53, where the extension part 52 is perpendicularly set at an end of the contacting part 41; and the elastic plate 53 is set flat at an end of the extension part 52 and has two fins 531 at two sides separately. The second electrode unit 5 is bonded to the plugging slot 15 of the base 1 with the fins 531; the contacting part 51 is extended out at another side of the base 1; and, the elastic plate 53 is extended to the laying area 11.

Thus, with the above structure, a novel battery seat having stability and conductivity is obtained.

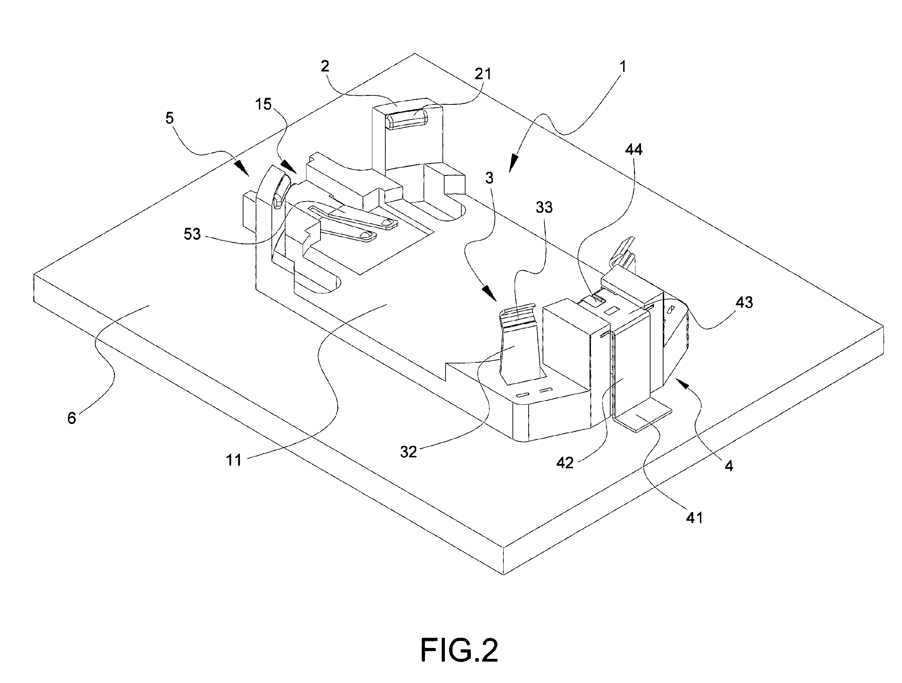

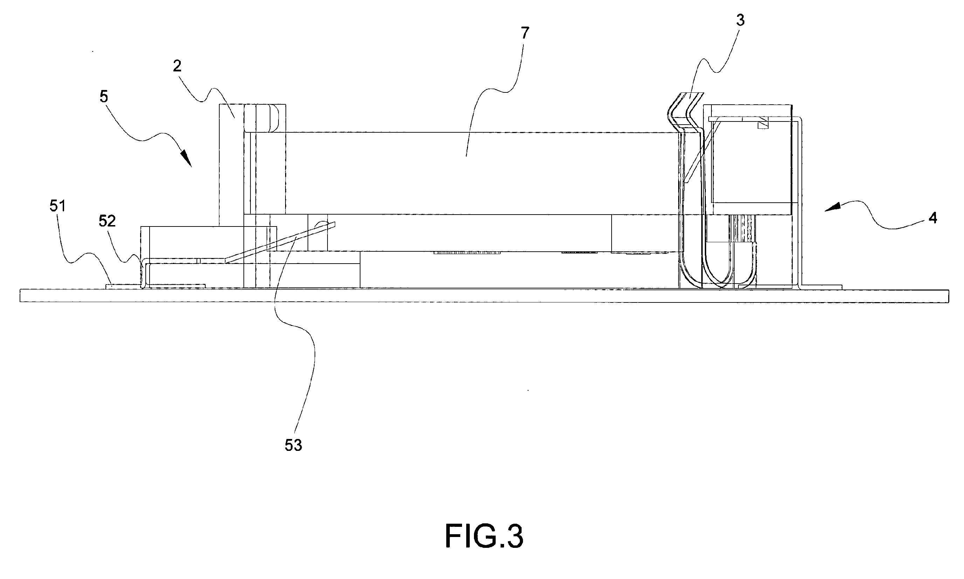

Please refer to FIG.2 and FIG.3, which are a view showing the assembly of the present invention and a sectional view showing a state of use. As shown in the figures, on using the present invention, contacting parts 41,51 of a first electrode unit 4 and a second electrode unit 5 are electrically connected with a circuit board 6, where the present invention is fixed on the circuit board 6 at a proper position; the first electrode unit 4 is defmed as a positive electrode; and the second electrode unit 5 is defined as a negative electrode.

When a battery 7 is laid on the base 1, a side of the battery 7 is slantingly butted on a first fastening unit 2 so that a hook 21 of the first fastening unit 2 is fastened at a side of a top surface of the battery 7. Then a downward force is applied at another side of the top surface of the battery 7 to press a hook 33 of a second fastening unit 3 by another side of the battery 7 for moving an elastic part 32 of the second fastening unit outwardly. After the another side of the battery 7 passes the hook 33, the battery 7 is laid in the laying area 11, where the another side of the battery 7 is butted against the elastic part 32 and the hook 33 is fastened at another side of the top surface of the battery 7. When the battery 7 is set on the laying area 11, an elastic plate 44 of the first electrode unit 4 is contacted at a upper side (positive electrode) of the battery 7 and an elastic plate 53 of the second electrode unit 5 is contacted at a lower side (negative electrode) of the battery 7 to turn on the battery 7 for related use of the circuit board 6.

Thus, on assembling the base 1 and the battery 7, the first fastening unit 2 is used as a pivot point and the second fastening unit 3 is used as a point of application. Structure of the second fastening unit 3 is strengthened. The second fastening unit 3 is made of a metal with a good elasticity, a long life and a high ductility so that the second fastening unit 3 is not easily fatigued and the battery 7 is stably set on the seat. Furthermore, by heightening elasticity coefficients of the first electrode unit 4 and the second electrode unit 5 with ductility of metal, the first electrode unit 4 and the second electrode unit 5 of whole metal are used as pivot points so that the elasticity between the battery 7 and the first electrode unit 4 and the second electrode unit 5 is not easily fatigued and a good conductivity is obtained.

To sum up, the present invention is a battery seat having stability and conductivity, where fastening units and electrode units of the seat obtain enhanced elasticity and strengthened structure for good stability and conductivity after laying a battery on the seat.

The preferred embodiment herein disclosed is not intended to unnecessarily limit the scope of the invention. Therefore, simple modifications or variations belonging to the equivalent of the scope of the claims and the instructions disclosed herein for a patent are all within the scope of the present invention.

## Claims

1. A battery seat having stability and conductivity, comprising:
a base, said base comprising a laying area, a fixing seat at a side and a plugging slot at another side, said plugging slot being connected with said laying area, said base being made of a plastic material;
two first fastening units, said two first fastening units being adhered to two sides of said plugging slot separately, said first fastening units being obtained with said base as a whole;
two second fastening units, said two second fastening units being bonded to said base at two sides of said fixing seat separately, said second fastening unit being made of a metal;
a first electrode unit, said first electrode unit being deposited on said fixing seat, said first electrode unit having an end on a surface of said fixing seat corresponding to said laying area, said first electrode unit having another end being extended out a side of said base; and
a second electrode unit, said second electrode unit being bonded to said plugging slot, said second electrode unit having an end being extended out said laying area, said second electrode unit having another end being extended out a side of said base.

2. The seat according to claim 1,
wherein said fixing seat has two grooves at two sides bonding with said two second fastening units separately.

3. The seat according to claim 1,
wherein said fixing seat has rabbets on top to fix said first electrode unit.

4. The seat according to claim 1,
wherein said first fastening unit is perpendicularly set on said base as a whole.

5. The seat according to claim 1,
wherein each of said first fastening units has a hook on an end surface corresponding to said laying area.

6. The seat according to claim 1,
wherein each of said second fastening unit comprises a hooking part, an elastic part and a hook;
wherein said hooking part is bonded to said base;
wherein said elastic part is connected with said hooking part and is perpendicularly set on said base; and
wherein said hook is set on an end surface of said elastic part corresponding to said laying area.

7. The seat according to claim 1,
wherein said first electrode unit comprises a contacting part, an extension part, a planar part and an elastic plate;
wherein said extension part is perpendicularly set at an end of said contacting part;
wherein said planar part is set flat at an end of said extension part and has two fins at two sides separately;
wherein said elastic plate is slantingly set at an end of said planar part;
wherein said planar part is bonded on an end surface of said fixing seat;
wherein said contacting part is extended out at a side of said base; and wherein said elastic plate is corresponding to said laying area.

8. The seat according to claim 1,
wherein said second electrode unit comprises a contacting part, an extension part and an elastic plate;
wherein said extension part is perpendicularly set at an end of said contacting part;
wherein said elastic plate is set flat at an end of said extension part and has two fins at two sides separately;
wherein said second electrode unit is bonded to said plugging slot of said base with said fins;
wherein said contacting part is extended out at another side of said base; and
wherein said elastic plate is extended to said laying area.
